(19) Europäisches Patentamt / European Patent Office / Office européen des brevets

(11) **EP 4 561 884 B1**

(12) **EUROPEAN PATENT SPECIFICATION**

(45) Date of publication and mention
of the grant of the patent:
**28.01.2026  Bulletin 2026/05**

(21) Application number: **23744421.1**

(22) Date of filing: **17.07.2023**

(51) International Patent Classification (IPC):
**B60W 60/00** (2020.01)     **B60W 50/00** (2006.01)

(52) Cooperative Patent Classification (CPC):
**B60W 60/0013; B60W 50/0098; B60W 60/001;**
B60W 2050/0095; B60W 2520/10; B60W 2520/14;
B60W 2554/80

(86) International application number:
**PCT/EP2023/069826**

(87) International publication number:
**WO 2024/022875 (01.02.2024 Gazette 2024/05)**

(54) **CONTROL SYSTEM AND METHOD FOR CONTROLLING AUTONOMOUS DRIVING OF A VEHICLE**

STEUERUNGSSYSTEM UND VERFAHREN ZUR STEUERUNG DES AUTONOMEN FAHRENS EINES FAHRZEUGS

SYSTÈME DE COMMANDE ET PROCÉDÉ DE COMMANDE DE CONDUITE AUTONOME D'UN VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.07.2022  GB 202210908**

(43) Date of publication of application:
**04.06.2025   Bulletin 2025/23**

(73) Proprietor: **Jaguar Land Rover Limited
Coventry, Warwickshire CV3 4LF (GB)**

(72) Inventors:
• **PENET, Maxime
Coventry Warwickshire CV3 4LF (GB)**

• **HERRERA, Juan
Coventry Warwickshire CV3 4LF (GB)**
• **GIORGIO BORT, Carlos
Coventry Warwickshire CV3 4LF (GB)**

(74) Representative: **Jaguar Land Rover Patents Department
Patents Department W/1/073
Abbey Road, Whitley
Coventry CV3 4LF (GB)**

(56) References cited:
**US-A1- 2021 046 923     US-A1- 2021 300 348**

Description

## TECHNICAL FIELD

The present disclosure relates to a control system, a vehicle, a method, and computer software for determination of autonomous manoeuvring control configurations. In particular, but not exclusively it relates to determination of autonomous manoeuvring control configurations of a passenger vehicle.

## BACKGROUND

An autonomous driving system typically comprises a hierarchy of controllers. A trajectory planner is a high-level controller configured to calculate an optimal local trajectory of the vehicle within a detected free space, for following a programmed route while avoiding a detected obstacle space. A manoeuvring controller is a lower-level controller configured to control autonomous driving actuators of the vehicle, such as an engine, brakes and steering system, to follow the planned local trajectory. The configuration of the manoeuvring controller such as its tuning parameters, calculation speed, or control horizon, affects the trade-off between control accuracy and vehicle occupant comfort. Optimising the configuration of the manoeuvring controller to behave robustly across a wide range of driving situations is a difficult task.

US20210300348A1 discloses a vehicle control device including: a recognition unit configured to recognize an object which is located near a vehicle; a calculation unit configured to calculate an area of risk which is distributed around the object; a generation unit configured to generate a target trajectory for the vehicle to travel along on the basis of the area; and a driving control unit configured to automatically control at least one of a speed or steering of the vehicle on the basis of the target trajectory, wherein the generation unit selects one or a plurality of models from a plurality of models that output the target trajectory in a case where the area is input, inputs the area calculated by the calculation unit to the selected model, and generates the target trajectory on the basis of an output result of the model to which the area is input, and the calculation unit changes a range of the area in accordance with a type of model selected by the generation unit.

## SUMMARY OF THE INVENTION

It is an aim of the present invention to address one or more of the disadvantages associated with the prior art.

The scope of the invention is defined by the appended claims.

According to an aspect of the invention there is provided a control system for controlling autonomous driving of a vehicle as defined in claim 1, the control system comprising one or more controllers, the control system configured to:

> obtain information indicative of one or more trajectory characteristics associated with a planned local trajectory of the vehicle; and
>
> determine a manoeuvring control configuration in dependence on the one or more trajectory characteristics, wherein the manoeuvring control configuration is configured to control autonomous manoeuvring actuations of the vehicle associated with following the planned local trajectory.

An advantage is enabling more optimal low-level control of an autonomous driving function, because the control system can select, at the right time, configurations that are optimised to handle specific detected driving situations.

A further advantage is that the selection can be made internally and quickly within a vehicle motion controller by analysing the already-planned trajectory itself, without needing to refer back to sensor data from the machine vision sensors or high-definition maps.

As further defined in claim 1, the one or more trajectory characteristics comprise information indicative of a tolerance of the planned local trajectory of the vehicle, wherein the tolerance is dependent on a detected collision-free space, and wherein the manoeuvring control configuration controls a spatial accuracy of the autonomous manoeuvring actuations in dependence on the tolerance. This enables the vehicle to temporarily select a configuration optimised for driving in confined spaces, such as width-limited spaces, before reverting to a more comfortable configuration.

The one or more trajectory characteristics may comprise one or more of: yaw angle of the planned local trajectory; orientation of the planned local trajectory; speed of the planned local trajectory; or curvature of the planned local trajectory.

Determining the manoeuvring control configuration may be further dependent on information indicative of a current dynamic state of the vehicle. The information indicative of the current dynamic state of the vehicle may comprise one or more of: speed information indicative of a speed of the vehicle; yaw rate information indicative of a yaw rate of the vehicle; vehicle positioning information indicative of a current position and/or orientation of the vehicle; or steering angle information indicative of a current steerable wheel angle of the vehicle.

The planned local trajectory may comprise a next planned manoeuvre or sequence of planned manoeuvres, planned in dependence on information from one or more line-of-sight sensors of the vehicle.

The control system may be configured to determine, via an inference engine, a driving situation class of the vehicle in dependence on the one or more trajectory characteristics, wherein determining the manoeuvring control configuration in dependence on the one or more trajectory characteristics comprises determining the manoeuvring control configuration in dependence on the determined driving situation class.

Determining the manoeuvring control configuration may be further dependent on a confidence bound on the determined driving situation class. The confidence bound can be used to control the relative weighting of two simultaneously-used manoeuvring control configurations. An advantage is that degradation of performance is smooth in edge cases.

The inference engine may be configured to adapt to user feedback to modify decision boundaries between different driving situation classes. This enables decision boundaries between driving situation classes to be optimised.

The manoeuvring control configuration may comprise at least one of: a controller architecture; a controller speed; a controller horizon; or one or more controller calibration parameters. The controller architecture may enable selection from any two or more of the following control schemes for controlling the autonomous manoeuvring actuations: a reactive control scheme; a predictive control scheme; a dynamic control scheme; or a kinematic control scheme.

The autonomous manoeuvring actuations may comprise one or more of steering, acceleration or braking.

According to a further aspect of the invention there is provided a vehicle comprising the control system.

According to a further aspect of the invention there is provided a method of controlling autonomous driving of a vehicle as defined in claim 13.

According to a further aspect of the invention there is provided computer software that, when executed, is arranged to perform the method.

## BRIEF DESCRIPTION OF THE DRAWINGS

One or more embodiments of the invention will now be described, by way of example only, with reference to the accompanying drawings, in which:

FIG. 1 illustrates an example of a vehicle;
FIG. 2 illustrates an example of a control system;
FIG. 3 illustrates an example of a non-transitory computer-readable storage medium;
FIG. 4 illustrates an example of an obstacle-avoidance use case;
FIG. 5 illustrates an example of a narrow road use case;
FIG. 6 illustrates an example of an inference engine; and
FIG. 7 illustrates an example of a method.

## DETAILED DESCRIPTION

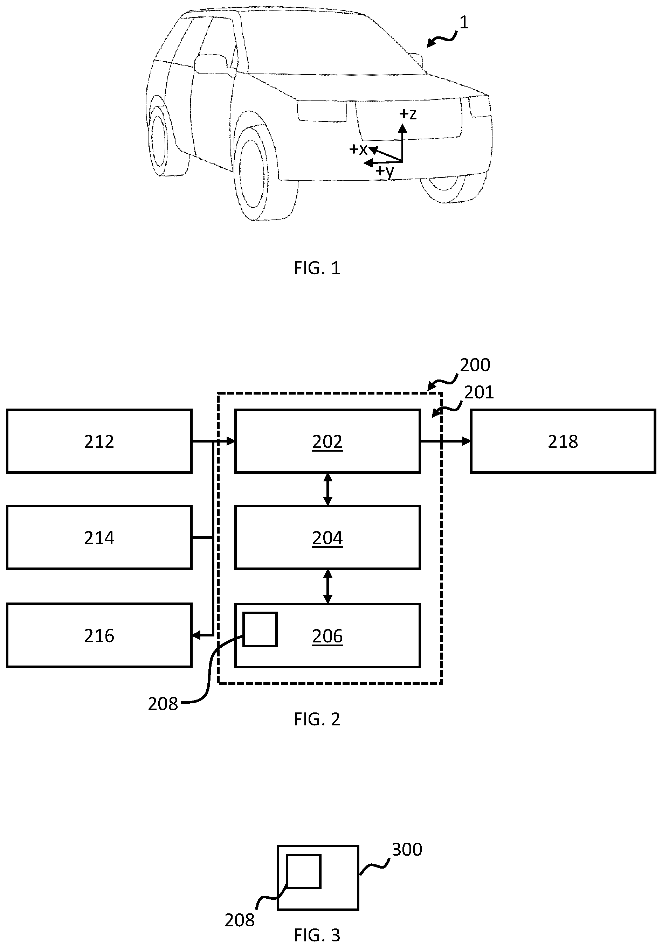

FIG. 1 illustrates an example of a vehicle 1 in which embodiments of the invention can be implemented. In some, but not necessarily all examples, the vehicle 1 is a passenger vehicle, also referred to as a passenger car or as an automobile. In other examples, embodiments of the invention can be implemented for other applications, such as commercial vehicles.

FIG. 1 is a front perspective view and illustrates a longitudinal x-axis between the front and rear of the vehicle 1 representing a centreline, an orthogonal lateral y-axis between left and right lateral sides of the vehicle 1, and a vertical z-axis. A forward/fore direction typically faced by a driver's seat is in the negative x-direction; rearward/aft is +x. A rightward direction as seen from the driver's seat is in the positive y-direction; leftward is -y. These are a first lateral direction and a second lateral direction.

FIG. 2 illustrates an example control system 200 configured to implement one or more aspects of the invention. The control system 200 of FIG. 2 comprises a controller 201. The control system 200 may be a vehicle motion controller (VMC) or the like. In other examples, the control system 200 may comprise a plurality of controllers on-board and/or off-board the vehicle 1.

The controller 201 of FIG. 2 includes at least one processor 204; and at least one memory device 206 electrically coupled to the electronic processor 204 and having instructions (e.g. a computer program 208) stored therein, the at least one memory device 206 and the instructions configured to, with the at least one processor 204, cause any one or more of the methods described herein to be performed. The processor 204 may have an interface 202 such as an electrical input/output I/O for receiving information from:

- a trajectory planner (or if the control system 200 comprises the trajectory planner, from autonomous driving sensors 212);

- odometry 214 (e.g., vehicle speed, vehicle yaw, vehicle yaw rate, vehicle steering angle information, vehicle positioning information such as position/orientation of the vehicle 1); and
- a human-machine interface (HMI) 216

The interface 202 is also configured to interact with external components, such as autonomous driving actuators 218 of the vehicle 1. The autonomous driving actuators 218 can comprise one or more of: a prime mover actuator, a braking actuator, or a steering actuator.

FIG. 3 illustrates a non-transitory computer-readable storage medium 300 comprising the instructions (computer software).

A prime mover actuator of the vehicle 1 comprises, for example, an internal combustion engine ('engine'), electric machine or the like.

A braking actuator of the vehicle 1 comprises, for example, friction brakes and/or an electric machine configured for regenerative braking.

A steering actuator of the vehicle 1 comprises, for example, an electrical power steering actuator or another suitable type of actuator.

The control system 200 is configured to autonomously control the autonomous driving actuators 218. The vehicle 1 may either be a permanently autonomous vehicle, or may have autonomous and non-autonomous (manual) driving modes. In the latter example, the control system 200 may enable user-initiation of autonomous driving functions such as one or more of: an autonomous driving mode; a vehicle parking assistance function (automated pulling into and/or out of parking spaces); an autonomous highway-driving function; a cruise control function; an adaptive cruise control function; an autonomous emergency braking function; and/or the like.

A trajectory planner may be implemented as a function of the control system 200 or of an upstream/higher level control system. The trajectory planner is configured to calculate an optimal local trajectory of the vehicle 1 within a detected free space, for following a programmed route while avoiding a detected obstacle space. The free space and obstacle space are detected in dependence on information from the autonomous driving sensors 212, which include one or more line of sight sensors. The line of sight sensors include machine vision sensors, such as camera, radar, or lidar sensors, on the vehicle 1, to detect an environment within a line of sight of the vehicle 1.

A 'local' trajectory refers to a trajectory that has been planned by the trajectory planner in dependence on information from the line of sight sensors. The local trajectory may refer to a portion of the trajectory within X seconds ahead of the vehicle, where X is a value selected from the range 1-5 seconds or 1-2 seconds. Therefore, the planned local trajectory may comprise only the next planned manoeuvre of the vehicle or the next sequence of planned manoeuvres.

The planned local trajectory is provided to a manoeuvring controller. The manoeuvring controller may be implemented via hardware 201 and/or software 208 within the control system 200.

The manoeuvring controller architecture has a manoeuvring control configuration to control the autonomous driving actuators 218 of the vehicle 1 to follow the planned local trajectory. The manoeuvring control configuration can comprise a manoeuvring controller architecture having a set of tuning parameters. Manoeuvring controller architectures include, for example, reactive control schemes (e.g., PID, Sliding Mode Controllers), or predictive control schemes (e.g., Linear Model Predictive Controllers, Optimal Controllers). The latter can be calculated based on dynamic or kinematic models of the vehicle. The tuning parameters may comprise controller calibration parameters such as weights applied to one or more objective functions (e.g., error minimisation terms relative to an accuracy target, a comfort target, and/or the like) of the manoeuvring controller. Other example turning parameters include heuristics, a controller speed (e.g., frequency of calculations), a controller horizon (e.g., length of the planned local trajectory to be optimised by the trajectory planner or manoeuvring controller), and/or the like.

According to at least some examples of the disclosure, the control system 200 is configured to automatically (without user intervention) adapt the manoeuvring control configuration in dependence on one or more analysed trajectory characteristics (e.g., one or more of trajectory yaw angle, trajectory orientation, trajectory speed, trajectory curvature) of the planned local trajectory of the vehicle 1, and optionally in dependence on a current dynamic state of the vehicle 1. Optionally, the adaptation is improved via user feedback.

The adaptation controls how accurately the autonomous driving actuators 218 are controlled to follow the planned local trajectory within the autonomous driving function. This affects the speed of autonomous manoeuvring actuations and the number of micro-actuations, both of which affect the jerk/comfort experienced by the user.

Adapting the manoeuvring control configuration can comprise, for example, selecting different sets of tuning parameters and/or selecting different manoeuvring controller architectures (reactive, predictive, dynamic, kinematic).

The manoeuvring control configuration is changed temporarily, for as long as the planned local trajectory falls within a particular class or satisfies a particular condition. Once the class or condition is no longer satisfied, the manoeuvring control configuration may revert to a default, persistent manoeuvring control configuration for the next part of the planned local trajectory within the autonomous driving function.

The default manoeuvring control configuration may correspond to, for example, a manually or automatically selected state/mode/class that may not depend on selection conditions such as one or more of: a driving mode selected by the user via HMI 216; the selected type of autonomous driving function (e.g., vehicle parking assistance function vs highway driving function); a detected road property; a detected surface condition; a detected weather condition; a detected traffic condition, and/or the like. In other words, the selection conditions for a default manoeuvring control configuration are not related to the analysis of one or more trajectory characteristics.

In a highway setting (with no obstacle in the proximity of the vehicle 1) the user may prefer to have a comfortable drive with as few steering wheel movements as possible, since what matters more is to remain within the lane in comfort, rather than to be perfectly centred between lane dividers.

On the contrary, in a parking scenario or when driving through narrow openings, the user may prefer to have a very accurate controller which possibly will induce more steering wheel motion. What matters more is that the vehicle 1 does not come too close to obstacles and that at the end of the manoeuvre the vehicle 1 is well positioned and oriented.

Based on at least the above scenarios, the examples described herein are configured to detect the condition in which a given manoeuvring control configuration is at least temporarily more desirable than the current default. As an example, the control system 200 can have at least some of the following manoeuvring control configurations:

- First configuration ('Comfortable drive'): enable control of the autonomous driving actuators 218 at a first (slow) rate, for example by one or more of:

   lowering the weight applied to a reference tracking accuracy term in an objective function of the manoeuvring controller;
   lowering the weight applied to a proportional and/or integral term and/or to a differential term in a proportional-integral-differential (PID) (or PI) manoeuvring controller;
   applying a comfort constraint (e.g., jerk limit) to the manoeuvring controller or increasing a weight applied to such comfort constraint; or
   reducing a controller speed to a lower calculation frequency; or
   increasing a controller horizon to a greater distance of the planned local trajectory.

- Second configuration ('Accurate drive'): enable control of the autonomous driving actuators 218 at a second (fast) rate, faster than the first rate of the first configuration, to ensure that the planned local trajectory is tracked by the vehicle 1 more accurately than in the first configuration. Implementation of the second configuration can comprise one or more of the following changes relative to the first configuration:

   increasing the weight applied to the reference tracking accuracy term in the objective function of the manoeuvring controller;
   increasing the weight applied to a proportional term and/or to an integral term and/or to a differential term in the proportional-integral-differential (PID) (or PI) manoeuvring controller;
   removing the comfort constraint (e.g., jerk limit) to the manoeuvring controller or decreasing the weight applied to such comfort constraint;
   increasing a controller speed to a faster calculation frequency; or
   decreasing a controller horizon to a shorter distance of the planned local trajectory.

- Third configuration ('Emergency drive'): a controller which determines the control action in a conservative way in order to guarantee a minimal set of performances in a wider set of conditions. This configuration is faster than the second configuration, and the primary difference is that it will have fewer KPIs (key performance indicators) to fulfil, but must fulfil the remaining KPIs more stringently. For instance, the emergency drive might request:

   - a stop in lane: the comfort and trajectory tracking KPIs will be neglected, and the controller will prioritise vehicle deceleration.
   - an obstacle avoidance manoeuvre: the comfort KPIs will be neglected, and the controller will prioritise minimisation of lateral and yaw errors.
   - loss of adherence: if the vehicle understeers or oversteers, the controller will neglect the comfort and trajectory tracking KPIs, and will control the vehicle by ensuring the achievement of some vehicle stability-related KPI. The stability-related KPI, when oversteering, could be represented by a distance of the current operating condition to a set stability margin (such stability margin could be represented by the critical speed, that is the speed at which the yaw rate of an oversteering vehicle becomes theoretically infinite). In case of an understeering vehicle, the stability-related KPI could be the distance of the current operating condition with respect to the ellipses of adherence that sets limits for the maximum longitudinal and lateral accelerations that can be achieved).

- Fourth configuration ('dynamic drive'): a controller which has a better knowledge of vehicle dynamics and thus takes the vehicle up to its stability limits in exchange for a heavier computational load. Examples of this configuration include a vehicle performing a minimum-time lap on a race track. In this case the comfort KPIs will be marginally considered. Instead, the primary KPIs that will be taken into account are those related to the trajectory tracking and vehicle stability (see configuration 3).

The following Table identifies the importance (weighting) given to each KPI in each configuration, according to an example implementation:

| configuration | KPI comfort | KPI trajectory tracking | KPI vehicle stability |
|---|---|---|---|
| 1. Comfortable | High importance | Low importance | Not considered |
| 2. Accurate | Low importance | High importance | Not considered |
| 3. Emergency | Not considered | High importance | Low importance |
| 4. Dynamic | Low importance | High importance | High importance |

In an example implementation, the control system 200 may automatically select the default manoeuvring control configuration (e.g., first, second, third or fourth configuration) in dependence on the selected autonomous driving function (e.g., if the driver has selected a vehicle parking assistance function such as self-parking, then by default the control system 200 will select the second configuration) or other factors. However, there are cases where the situation is blurrier.

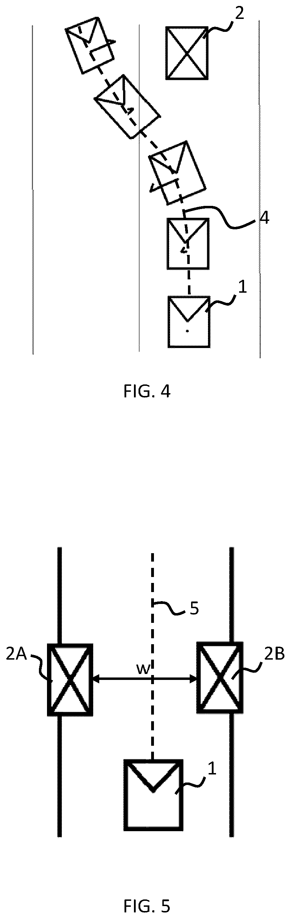

As an example, consider the case in FIG. 4 in which the vehicle 1 is driving autonomously on a highway and approaches an obstacle 2 within its lane. In this example, the default manoeuvring control configuration has been the first configuration ('comfortable drive') up to now. While driving autonomously within the default manoeuvring control configuration, the control system 200 determines the trajectory characteristics (e.g., one or more of trajectory yaw angle, trajectory orientation, trajectory speed, trajectory curvature) of a planned local trajectory 4 that the trajectory planner has asked the control system 200 to follow, to swerve around/avoid the obstacle 2. The control system 200 may also concurrently determine (possibly estimate) the current dynamic state of the vehicle 1 (e.g., vehicle speed; vehicle yaw rate; vehicle steering angle; vehicle positioning [position/orientation]).

By determining the above information in the scenario of FIG. 4, the control system 200 detects that the planned local trajectory 4 requests the vehicle 1 to make a fast lateral motion (e.g., because the control system 200 can observe that the lateral acceleration, according to the trajectory X seconds ahead of the vehicle, where X is selected from the range 1-5 seconds, is changing sign at high rate). In this situation the control system 200 may determine to switch to another manoeuvring control configuration, such as the second, third or fourth configuration (accurate drive, emergency drive or dynamic drive), in order to select the manoeuvring control configuration that can provide the best performance in terms of stability when avoiding the obstacle 2 shown in FIG. 4. If there are multiple configurations to choose from, the selection may depend for example on the detected magnitude of the trajectory characteristic, for example, the peak rate of change of lateral acceleration of the planned local trajectory 4. Each manoeuvring control configuration may have a different entry condition/decision boundary associated therewith. The entry conditions/decision boundaries may be implemented in an inference engine (e.g., classifier) as explained later, and optimised via machine learning. Alternatively, the entry conditions may be implemented as static thresholds or static maps or the like.

An example machine learning algorithm (e.g. neural network or linear regression) can read the inputs (trajectory characteristics, current dynamic state) mentioned above, and possibly more (to the extreme, all the information flowing through the vehicle network) and it will automatically select and combine the inputs that are most significant for the current driving scenario. This selection is typically done through a set of convolutional operations, known in literature as autoencoders, convolutional neural networks or deep learning.

Once the obstacle 2 has been avoided, the trajectory characteristic may no longer satisfy the entry condition/any of the entry conditions (e.g., thresholds) for temporary deviation from the default manoeuvring control configuration. Therefore, the control system 200 may automatically return to the default manoeuvring control configuration. Optionally, hysteresis may be implemented such as an offset return condition for returning to the default manoeuvring control configuration.

Another example is illustrated in FIG. 5. The vehicle 1 may be driving autonomously and approaches double-parked cars 2A, 2B (or any other obstacle(s) narrowing the width of the collision free space). In this example, the default manoeuvring control configuration has been the first configuration ('comfortable drive') up to now, or a sub-configuration thereof (e.g., an urban comfortable setting).

By determining the trajectory characteristics and optionally the current dynamic state of the vehicle 1, the control system 200 detects the upcoming decreased spatial tolerance of the planned local trajectory 5. The spatial tolerance may be indicative of the width 'w' of the collision free space between detected the obstacles 2A, 2B. The spatial tolerance may be expressed for example as a spatial width constraint or spatial lateral obstacle constraints imposed upon the trajectory planner. If the tolerance is too tight (e.g., width below a threshold), the control system 200 may determine to switch to another manoeuvring control configuration, such as the second configuration ('accurate drive'). One or more or each configuration may have an entry condition associated with the spatial tolerance of the planned local trajectory 5. As described above, the entry conditions may be implemented within the inference engine as described later, or may be static conditions.

Once the narrow section has been passed, the increased spatial tolerance may no longer satisfy the entry condition/any of the entry conditions (e.g., thresholds) for temporary deviation from the default manoeuvring control configuration. Therefore, the control system 200 may automatically return to the default manoeuvring control configuration. Optionally, hysteresis may be implemented such as an offset return condition for returning to the default manoeuvring control configuration.

Similarly to the scenario of FIG. 5, the second configuration may be selected when autonomously parking, if the spatial tolerance indicates that the parking space is tight (e.g., width and/or length spatial constraints, accuracy of the target stop position).

In a further stopping scenario such as emergency stopping, a further trajectory characteristic to be taken into account can comprise a distance to a target stop position of the vehicle 1 and/or a distance to the obstacle.

The common point of the above examples of FIGS. 4 and 5 is that the driving situation is fuzzier than a simple default configuration selection. In both cases, in order to improve the overall behaviour of the vehicle 1, the control system 200 may be configured to classify the current driving scenario to select a more appropriate manoeuvring control configuration. Doing so provides at least two advantages: the control system 200 will be able to consider a greater number of driving scenarios; and the control system 200 can assume that in each situation the performance will improve as there will be less need for considering boundary conditions.

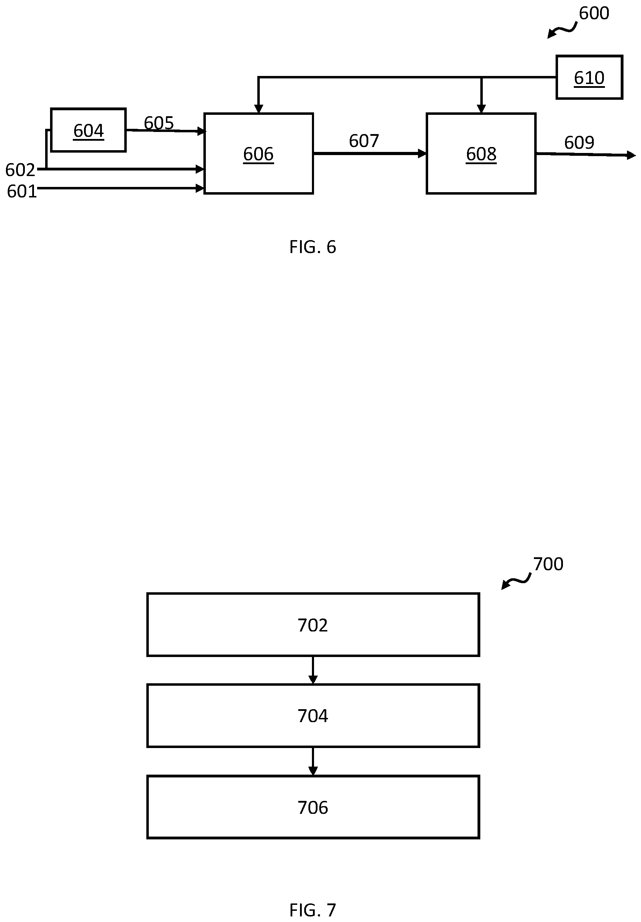

According to at least some examples of the disclosure, and as shown in FIG. 6, the control system 200 can implement an inference engine 600 (such as a classifier) configured to classify/determine the driving situation. Each class may correspond to a different one of the first, second, nth configuration as described earlier.

The inference engine 600 may only consider signals that are already available to the control system 200. These are:

(1) the trajectory characteristics associated with the planned local trajectory (e.g., including tolerances or acceptable boundaries for each state describing the trajectory, i.e., positions, width constraints, speeds, curvature, yaw, etc.);
(2) vehicle odometry information indicative of the current dynamic state of the vehicle 1 (e.g., vehicle speed, vehicle yaw, vehicle yaw rate, vehicle steering angle information such as road wheel angle], vehicle positioning information such as position/orientation of the vehicle 1);
(3) obstacles detected by the onboard perception system (from line of sight sensors 212 such as cameras, radar, lidar and/or ultrasonic sensors); and
(4) other relevant information in the vehicle network (e.g., status of head lights, indicators, outside temperature, air humidity, tyre pressures, etc.).

Using these signals, the inference engine 600 can infer a score for each candidate class (e.g., a probability measure, a number on pre-defined scale ...), select the class with the highest score, and optionally provide a confidence bound on the or each result (which can be used by the inference engine 600 to modulate its behaviour based on the risk of choosing a wrong manoeuvring control configuration).

In some, but not necessarily all examples, the inference engine 600 may advantageously exclude direct use of sensory information from the line of sight sensors 212, and localisation information (e.g., radionavigation position such as GPS position within a high-definition map domain). The idea is that this feature can reside autonomously within the control system 200 and thus does not need to request more information from the higher level trajectory planner. In other words, the inference engine 600 directly analyses the planned local trajectory. Further, the inference engine 600 will be compatible with the information available for autonomous vehicle functions from level 2 to level 5 autonomy (as defined in SAE J3016).

Some embodiments might be implemented by using supplementary signals (e.g. lateral slip information indicating understeer or oversteer, vehicle pitch rate, vehicle roll rate) to further indicate the current dynamic state of the vehicle 1. If such signals are not already available to the control system 200, they can be made available by reprogramming the control system 200 to access the information from the relevant vehicle communication bus/interface.

In the example inference engine 600 of FIG. 6, vehicle odometry information 602 from the odometry source 214 is passed to an estimation algorithm block 604 configured to estimate the vehicle states that might not be already available, e.g., slip angles, longitudinal slip, vehicle mass, etc. The estimation algorithm block 604 is configured to output estimated signals 605. A classifier scoring block 606 is configured to receive the trajectory characteristics 601 (and/or the trajectory 4, 5), and the vehicle odometry information 602 and/or the estimated signals 605, and is configured to determine and output a vector of class scores 607 (a score for each manoeuvring control configuration) in dependence thereon. The output may further include optional confidence bounds of each score. An inference mechanism 608 is configured to receive the vector of class scores 607 and the confidence bounds, and to select and output the selected manoeuvring control configuration 609 to the manoeuvring controller (e.g., implemented as software 208).

In order to score each driving situation, the inference engine 600 can rely on a machine learning engine. The classifier scoring block 606 and the inference mechanism 608 may together define the machine learning engine. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks (e.g., convolutional neural networks), gaussian processes, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

According to an example implementation, the machine learning engine uses two families of techniques:

- First the machine learning engine will be trained off-line via supervised learning/self-supervised learning/semi-supervised learning. This can comprise, for example, using replay data that has been collected and (possibly manually) labelled, or running simulations. This is the stage at which the trainer can introduce expert knowledge by the way each use cases are labelled.
- Then, while the algorithm is working to help perform a given autonomous driving task, the machine learning engine will be trained online via reinforcement learning. The reinforcement learning may comprise user monitoring or requesting user feedback. This enables the decision boundaries between the classes to be optimised. FIG. 6 illustrates a user feedback loop engine 610 connected to the blocks 606 and 608.

The machine learning engine can comprise any number of classes. Optionally, there can be more classes than there are manoeuvring control configurations, such that although each class may only be associated with one manoeuvring control configuration, each manoeuvring control configuration can be associated with a plurality of different classes. A non-limiting list of example class labels comprises one or more of:

- a swerve class (e.g., as in FIG. 4);
- a narrow width class (e.g., as in FIG. 5);
- an emergency stop class;
- a tight parking space class;
- an off road class;
- an overtaking class;
- a low friction (e,g, snow/ice) class.

Requesting user feedback can comprise, for example, the control system 200 causing output of a prompt via the HMI 216, asking for user feedback (e.g., the driver can rate how good the autonomous drive was). Alternatively, the user is unprompted but can manually provide the feedback by using/navigating to the appropriate HMI control/menu. The user's input will provide a reinforcement learning input that causes the machine learning engine to update the decision boundaries accordingly (e.g., via changing weights in a neural network).

If a prompt is output, the prompt may be timed to be output either at the end of a journey, at a vehicle stop, or directly after the deviation from the default manoeuvring control configuration such as in response to a return to the default manoeuvring control configuration.

User monitoring may comprise, for example monitoring how the user drives the vehicle 1 while the vehicle 1 is under manual control, so that the control system 200 will learn to classify driving situations more closely to how the user would behave when manually driving. Monitoring how the user drives the vehicle 1 may comprise monitoring the user's actuation inputs to the actuators 218, for example.

Depending on the implementation, the reinforcement learning may be applied globally to any/all users of the vehicle 1, or separate machine learning engines may be provided for each registered user (e.g., registered key/mobile phone/recognised user) of the vehicle 1. In some examples, the reinforcement learning may improve both a user-specific machine learning engine and a global user-agnostic machine learning engine as a multi-scale improvement.

Finally, the inference mechanism 608 will select which class (and therefore manoeuvring control configuration) is more appropriate based on the score and on some other consideration such as the confidence bound (e.g., the risk of being wrong given the current selected manoeuvring control configuration).

The confidence bound could be used in conjunction with the score to select intermediate configurations. For instance, class A might have a score of 1 (best) but confidence of 20%, while class B might have a score of 2 ($2^{nd}$ best) but a confidence of 70%. In this case, the applied configuration could be a mix between the one for class A and the class B, with parameters weighted depending on confidence, for instance: if config A (class A) has max lateral acceleration of 3 m/s^2 and config B (class B) has 1 m/s^2, the overall max lateral acceleration configured for the controller could be calculated from a weighed sum as follows:

$$20+70: 70 = 100 : x \rightarrow x = 70*100/(20+70) = 77.7$$

$$\text{Final max lateral accel} = 77.7\%*3 + (100\%-77.7\%)*1 = 2.55 \text{ m/s^2}$$

Once the inference engine 600 has selected a class, the control system 200 may optionally further comprise a mode manager (not shown) configured to decide whether to apply (or not) the change of manoeuvring control configuration (relative to default) and select the most appropriate manoeuvring control configuration. In practice this means that the output of the inference engine 600 is only advisory and can be automatically overridden, to ensure that the control system 200 is robust to edge cases beyond the scope of the training of the inference engine 600.

FIG. 7 provides an example flowchart of a method 700 for implementing an example of the invention. The method 700 is computer-implemented, and execution of the method may be performed by one or more controller(s) of the control system 200 or distributed across multiple control systems on-board and/or off-board the vehicle 1.

Block 702 of the method 700 comprises obtaining information indicative of one or more trajectory characteristics associated with a planned local trajectory of the vehicle 1. These terms have the meanings defined throughout this specification.

Optional block 704 of the method 700 comprises determining, via an inference engine 600, a driving situation class of the vehicle 1 in dependence on the one or more trajectory characteristics. These terms have the meanings defined throughout this specification. The determination may be via a trained machine learning engine as defined earlier. It would be appreciated that in another embodiment, the determination may rely on static conditions/thresholds rather than an inference engine 600.

Block 706 of the method 700 comprises determining a manoeuvring control configuration in dependence on the one or more trajectory characteristics, wherein the manoeuvring control configuration is configured to control autonomous manoeuvring actuations of the vehicle 1 associated with following the planned local trajectory. These terms have the meanings defined throughout this specification. In an example, the manoeuvring control configuration is determined in dependence on the determined driving situation class from block 704 (each class may correspond to a particular manoeuvring control configuration to be used).

The method may loop and repeat continually/periodically during autonomous driving, for example to repeatedly determine whether to deviate from or return to the default manoeuvring control configuration.

A list of definitions is provided below for the 'current dynamic state' variables:

- vehicle speed is the current speed of the vehicle 1 defined as units of distance/time;
- vehicle yaw rate is the rotational speed of the vehicle around its vertical z-axis, where such axis has its origin at the vehicle centre of mass, or any other fixed point in the vehicle body. The yaw rate is measured in radians per second.
- vehicle steering angle is the angle of the steerable wheels of the vehicle 1 (optionally taking into account rear-wheel steering), defined as units of angle relative to x-axis.
- vehicle positioning is the position of the vehicle 1 in a navigable space coordinate system and/or the direction of the vehicle 1 relative to a reference direction in the navigable space (e.g., compass direction or a suitable alternative);

A list of definitions is provided below for the 'trajectory characterstic' variables:
The following example trajectory characteristic definitions are provided:

- trajectory yaw angle is defined in angular units, and is represented as the orientation of the vector's tangent to each trajectory point in the selected inertial reference frame. For instance, it is the angle between the vector tangent to the nth trajectory and the latitude axis of a world reference frame. This is the orientation the vehicle should have when travelling across a given trajectory point.
- trajectory speed is defined as units of distance/time, and is represented as the speed the vehicle should have when travelling across a given trajectory point.
- trajectory curvature is defined as units of 1/metres, and is represented as a geometrical property of each trajectory point.

For purposes of this disclosure, it is to be understood that the controller(s) described herein can each comprise a control unit or computational device having one or more electronic processors. A vehicle and/or a system thereof may comprise a single control unit or electronic controller or alternatively different functions of the controller(s) may be embodied in, or hosted in, different control units or controllers. A set of instructions could be provided which, when executed, cause said controller(s) or control unit(s) to implement the control techniques described herein (including the described method(s)). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on one or more electronic processors, optionally the same one or more processors as the first controller. It will be appreciated, however, that other arrangements are also useful, and therefore, the present disclosure is not intended to be limited to any particular arrangement. In any event, the set of instructions described above may be embedded in a computer-readable storage medium (e.g., a non-transitory computer-readable storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

It will be appreciated that various changes and modifications can be made to the present invention without departing from the scope of the invention as defined in the appended claims.

The blocks illustrated in FIGS. 6-7 may represent steps in a method and/or sections of code in the computer program 208. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

**Claims**

1. A control system (200) for controlling autonomous driving of a vehicle (1), the control system comprising one or more controllers (201), the control system configured to:

   obtain information (702) indicative of one or more trajectory characteristics associated with a planned local trajectory (4, 5) of the vehicle (1); and
   determine (706) a manoeuvring control configuration in dependence on the one or more trajectory characteristics, wherein the manoeuvring control configuration is configured to control autonomous manoeuvring actuations of the vehicle associated with following the planned local trajectory,
   wherein the one or more trajectory characteristics comprises information indicative of a tolerance of the planned local trajectory (4, 5) of the vehicle (1), wherein the tolerance is dependent on a detected collision-free space, and wherein the manoeuvring control configuration controls a spatial accuracy of the autonomous manoeuvring actuations in dependence on the tolerance.

2. The control system of claim 1, wherein the one or more trajectory characteristics comprises one or more of:

   yaw angle of the planned local trajectory (4, 5);
   orientation of the planned local trajectory (4, 5);
   speed of the planned local trajectory (4, 5); or
   curvature of the planned local trajectory (4, 5).

3. The control system of claim 1 or 2, wherein determining the manoeuvring control configuration (706) is further dependent on information indicative of a current dynamic state of the vehicle.

4. The control system of claim 3, wherein the information indicative of the current dynamic state of the vehicle comprises one or more of:

   speed information indicative of a speed of the vehicle (1);
   yaw rate information indicative of a yaw rate of the vehicle (1);

vehicle positioning information indicative of a current position and/or orientation of the vehicle (1); or steering angle information indicative of a current steerable wheel angle of the vehicle (1).

5. The control system of any preceding claim, wherein the planned local trajectory (4, 5) comprises a next planned manoeuvre or sequence of planned manoeuvres, planned in dependence on information from one or more line-of-sight sensors (212) of the vehicle (1).

6. The control system of any preceding claim, configured to determine, via an inference engine (600), a driving situation class of the vehicle (1) in dependence on the one or more trajectory characteristics, wherein determining the manoeuvring control configuration in dependence on the one or more trajectory characteristics comprises determining the manoeuvring control configuration in dependence on the determined driving situation class.

7. The control system of claim 6, wherein determining the manoeuvring control configuration is further dependent on a confidence bound on the determined driving situation class.

8. The control system of claim 6 or 7, wherein the inference engine is configured to adapt to user feedback to modify decision boundaries between different driving situation classes.

9. The control system of any preceding claim, wherein the manoeuvring control configuration comprises at least one of: a controller architecture; a controller speed; a controller horizon; or one or more controller calibration parameters.

10. The control system of claim 9, wherein the controller architecture enables selection from any two or more of the following control schemes for controlling the autonomous manoeuvring actuations: a reactive control scheme; a predictive control scheme; a dynamic control scheme; or a kinematic control scheme.

11. The control system of any preceding claim, wherein the autonomous manoeuvring actuations comprise one or more of steering, acceleration or braking.

12. A vehicle comprising the control system of any preceding claim.

13. A method of controlling autonomous driving of a vehicle, the method comprising:

obtaining information (702) indicative of one or more trajectory characteristics associated with a planned local trajectory (4, 5) of the vehicle; and
determining (706) a manoeuvring control configuration in dependence on the one or more trajectory characteristics, wherein the manoeuvring control configuration is configured to control autonomous manoeuvring actuations of the vehicle associated with following the planned local trajectory,
wherein the one or more trajectory characteristics comprises information indicative of a tolerance of the planned local trajectory (4, 5) of the vehicle (1), wherein the tolerance is dependent on a detected collision-free space, and
wherein the manoeuvring control configuration controls a spatial accuracy of the autonomous manoeuvring actuations in dependence on the tolerance.

14. Computer software that, when executed, is arranged to perform a method according to claim 13.

**Patentansprüche**

1. Steuerungssystem (200) zur Steuerung des autonomen Fahrens eines Fahrzeug, (1), wobei das Steuerungssystem eine oder mehrere Steuerungen (201) umfasst, wobei das Steuerungssystem für Folgendes konfiguriert ist:

Gewinnen von Informationen (702), die ein oder mehrere Bewegungsbahnmerkmale angeben, die mit einer geplanten lokalen Bewegungsbahn (4, 5) des Fahrzeugs (1) in Zusammenhang stehen; und
Bestimmen (706) einer Manövriersteuerungskonfiguration in Abhängigkeit von dem einen oder den mehreren Bewegungsbahnmerkmalen, wobei die Manövriersteuerungskonfiguration dazu konfiguriert ist, autonome Manövriervorgänge des Fahrzeugs zu steuern, die mit dem Folgen der geplanten lokalen Bewegungsbahn in Zusammenhang stehen,
wobei das eine oder die mehreren Bewegungsmerkmale Informationen umfassen, die eine Toleranz der geplanten lokalen Bewegungsbahn (4, 5) des Fahrzeugs (1) angeben, wobei die Toleranz von einem erkannten kollisionsfreien Raum abhängig ist und wobei die Manövriersteuerungskonfiguration die räumliche Genauigkeit der autonomen Manövriervorgänge in Abhängigkeit von der Toleranz steuert.

2.  Steuerungssystem nach Anspruch 1, wobei das eine oder die mehreren Bewegungsbahnmerkmale eines oder mehrere der Folgenden umfassen:

    Gierwinkel der geplanten lokalen Bewegungsbahn (4, 5);
    Orientierung der geplanten lokalen Bewegungsbahn (4, 5);
    Geschwindigkeit der geplanten lokalen Bewegungsbahn (4, 5); oder
    Krümmung der geplanten lokalen Bewegungsbahn (4, 5).

3.  Steuerungssystem nach Anspruch 1 oder 2, wobei das Bestimmen der Manövriersteuerungskonfiguration (706) ferner von Informationen abhängig ist, die einen aktuellen dynamischen Zustand des Fahrzeugs angeben.

4.  Steuerungssystem nach Anspruch 3, wobei die Informationen, die den aktuellen dynamischen Zustand des Fahrzeugs angeben, eine oder mehrere der Folgenden umfassen:

    Geschwindigkeitsinformation, die die Geschwindigkeit des Fahrzeugs (1) angibt;
    Gierrateninformation, die die Gierrate des Fahrzeugs (1) angibt;
    Fahrzeugpositionierungsinformation, die die aktuelle Position und/oder Orientierung des Fahrzeugs (1) angibt; oder
    Lenkwinkelinformation, die den aktuellen Lenkwinkel des Fahrzeugs (1) angibt.

5.  Steuerungssystem nach einem der vorstehenden Ansprüche, wobei die geplante lokale Bewegungsbahn (4, 5) ein nächstes geplantes Manöver oder eine nächste Sequenz geplanter Manöver umfasst, das/die in Abhängigkeit von Informationen von einem oder mehreren Sichtliniensensoren (212) des Fahrzeugs (1) geplant wird.

6.  Steuerungssystem nach einem der vorstehenden Ansprüche, das dazu konfiguriert ist, mittels einer Inferenzengine (600) eine Fahrsituationsklasse des Fahrzeugs (1) in Abhängigkeit von dem einen oder den mehreren Bewegungsbahnmerkmalen zu bestimmen, wobei das Bestimmen der Manövriersteuerungskonfiguration in Abhängigkeit von dem einen oder den mehreren Bewegungsbahnmerkmalen das Bestimmen der Manövriersteuerungskonfiguration in Abhängigkeit von der bestimmten Fahrsituationsklasse umfasst.

7.  Steuerungssystem nach Anspruch 6, wobei das Bestimmen der Manövriersteuerungskonfiguration ferner von der Vertrauensgrenze der bestimmen Fahrsituationsklasse abhängig ist.

8.  Steuerungssystem nach Anspruch 6 oder 7, wobei die Inferenzengine dazu konfiguriert ist, sich an Benutzer-Feedback anzupassen, um Entscheidungsgrenzen zwischen verschiedenen Fahrsituationsklassen zu modifizieren.

9.  Steuerungssystem nach einem der vorstehenden Ansprüche, wobei die Manövriersteuerungskonfiguration mindestens eines der Folgenden umfasst: einer Steuerungsarchitektur; einer Steuerungsgeschwindigkeit; einem Steuerungshorizont oder einem oder mehreren Kalibrierungsparameter der Steuerung.

10. Steuerungssystem nach Anspruch 9, wobei die Steuerungsarchitektur eine Auswahl aus zwei oder mehr der folgenden Steuerungsschemata zum Steuern der autonomen Manövriervorgänge ermöglicht: ein reaktives Steuerungsschema; ein prädiktives Steuerungsschema; ein dynamisches Steuerungsschema; oder ein kinematisches Steuerungsschema.

11. Steuerungssystem nach einem der vorstehenden Ansprüche, wobei die autonomen Manövriervorgänge einen oder mehrere von Lenken, Beschleunigen und Bremsen umfassen.

12. Fahrzeug, umfassend das Steuerungssystem nach einem der vorstehenden Ansprüche.

13. Verfahren zum Steuern des autonomen Fahrens eines Fahrzeugs, wobei das Verfahren Folgendes umfasst:

    Gewinnen von Informationen (702), die ein oder mehrere Bewegungsbahnmerkmale angeben, die mit einer geplanten lokalen Bewegungsbahn (4, 5) des Fahrzeugs in Zusammenhang stehen; und
    Bestimmen (706) einer Manövriersteuerungskonfiguration in Abhängigkeit von dem einen oder den mehreren Bewegungsbahnmerkmalen, wobei die Manövriersteuerungskonfiguration dazu konfiguriert ist, autonome Manövrierbewegungen des Fahrzeugs zu steuern, die mit dem Folgen der geplanten lokalen Bewegungsbahn in Zusammenhang stehen,

wobei das eine oder die mehreren Bewegungsmerkmale Informationen umfassen, die eine Toleranz der geplanten lokalen Bewegungsbahn (4, 5) des Fahrzeugs (1) angeben, wobei die Toleranz von einem erkannten kollisionsfreien Raum abhängig ist und wobei die Manövriersteuerungskonfiguration die räumliche Genauigkeit der autonomen Manövriervorgänge in Abhängigkeit von der Toleranz steuert.

14. Computersoftware, die, wenn sie ausgeführt wird, eingerichtet ist, um ein Verfahren nach Anspruch 13 durchzuführen.

## Revendications

1. Système de commande (200) permettant de commander la conduite autonome d'un véhicule (1), le système de commande comprenant un ou plusieurs dispositifs de commande (201), le système de commande configuré pour :

   obtenir des informations (702) indiquant une ou plusieurs caractéristiques de trajectoire associées à une trajectoire locale planifiée (4, 5) du véhicule (1) ; et
   déterminer (706) une configuration de commande de manœuvre en fonction de la ou des caractéristiques de trajectoire, dans lequel la configuration de commande de manœuvre est configurée pour commander des actionnements de manœuvre autonomes du véhicule associés au suivi de la trajectoire locale planifiée,
   dans lequel la ou les caractéristiques de trajectoire comprend des informations indiquant une tolérance de la trajectoire locale planifiée (4, 5) du véhicule (1), dans lequel la tolérance dépend d'un espace sans collision détecté, et dans lequel la configuration de commande de manœuvre commande une précision spatiale des actionnements de manœuvre autonomes en fonction de la tolérance.

2. Système de commande selon la revendication 1, dans lequel la ou les caractéristiques de trajectoire comprennent l'un ou plusieurs parmi :

   un angle de lacet de la trajectoire locale planifiée (4, 5) ;
   une orientation de la trajectoire locale planifiée (4, 5) ;
   une vitesse de la trajectoire locale planifiée (4, 5) ; ou
   une courbure de la trajectoire locale planifiée (4, 5).

3. Système de commande selon la revendication 1 ou 2, dans lequel la détermination de la configuration de commande de manœuvre (706) dépend en outre d'informations indiquant un état dynamique actuel du véhicule.

4. Système de commande selon la revendication 3, dans lequel les informations indiquant l'état dynamique actuel du véhicule comprennent les unes ou plusieurs parmi :

   des informations sur la vitesse indiquant une vitesse du véhicule (1) ;
   des informations sur le taux de lacet indiquant un taux de lacet du véhicule (1) ;
   des informations sur le positionnement du véhicule indiquant une position et/ou orientation actuelle du véhicule (1) ; ou
   des informations sur l'angle de braquage indiquant un angle de braquage actuel des roues du véhicule (1).

5. Système de commande selon l'une quelconque revendication précédente, dans lequel la trajectoire locale planifiée (4, 5) comprend une prochaine manœuvre planifiée ou une séquence de manœuvres planifiées, planifiées en fonction d'informations provenant d'un ou plusieurs capteurs de visibilité directe (212) du véhicule (1).

6. Système de commande selon l'une quelconque revendication précédente, configuré pour déterminer, par l'intermédiaire d'un moteur d'inférence (600), une classe de situation de conduite du véhicule (1) en fonction de la ou des caractéristiques de trajectoire, dans lequel la détermination de la configuration de commande de manœuvre en fonction de la ou des caractéristiques de trajectoire comprend la détermination de la configuration de commande de manœuvre en fonction de la classe de situation de conduite déterminée.

7. Système de commande selon la revendication 6, dans lequel la détermination de la configuration de commande de manœuvre dépend en outre d'une limite de confiance de la classe de situation de conduite déterminée.

8. Système de commande selon la revendication 6 ou 7, dans lequel le moteur d'inférence est configuré pour s'adapter au retour d'information utilisateur afin de modifier les limites de décision entre les différentes classes de situation de conduite.

9. Système de commande selon l'une quelconque revendication précédente, dans lequel la configuration de commande de manœuvre comprend au moins l'un parmi : une architecture de dispositif de commande ; une vitesse de dispositif de commande ; un horizon de dispositif de commande ; ou un ou plusieurs paramètres d'étalonnage de dispositif de commande.

10. Système de commande selon la revendication 9, dans lequel l'architecture de dispositif de commande permet de la sélection parmi les quelconques deux ou plus des schémas de commande suivants permettant de commander les actionnements de manœuvre autonomes : un schéma de commande réactif ; un schéma de commande prédictif ; un schéma de commande dynamique ; ou un schéma de commande cinématique.

11. Système de commande selon l'une quelconque revendication précédente, dans lequel les actionnements de manœuvre autonomes comprennent l'un ou plusieurs parmi la direction, l'accélération ou le freinage.

12. Véhicule comprenant le système de commande selon l'une quelconque revendication précédente.

13. Procédé de commande de conduite autonome d'un véhicule, le procédé comprenant :

l'obtention d'informations (702) indiquant une ou plusieurs caractéristiques de trajectoire associées à une trajectoire locale planifiée (4, 5) du véhicule ; et
la détermination (706) d'une configuration de commande de manœuvre en fonction de la ou des caractéristiques de trajectoire, dans lequel la configuration de commande de manœuvre est configurée pour commander des actionnements de manœuvre autonomes du véhicule associés au suivi de la trajectoire locale planifiée,
dans lequel la ou les caractéristiques de trajectoire comprend des informations indiquant une tolérance de la trajectoire locale planifiée (4, 5) du véhicule (1), dans lequel la tolérance dépend d'un espace sans collision détecté, et dans lequel la configuration de commande de manœuvre commande une précision spatiale des actionnements de manœuvre autonomes en fonction de la tolérance.

14. Logiciel informatique qui, lorsqu'il est exécuté, est agencé pour effectuer un procédé selon la revendication 13.

FIG. 1

FIG. 2

FIG. 3

FIG. 4

FIG. 5

600

610

604    605    606    607    608    609

602

601

FIG. 6

700

702

704

706

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210300348 A1